# EUROPÄISCHE PATENTSCHRIFT

(11) **EP 2 006 172 B1**
(45) Veröffentlichungstag und Bekanntmachung des Hinweises auf die Patenterteilung: **28.11.2012**
(21) Anmeldenummer: 08103633.7
(22) Anmeldetag: 21.04.2008
(51) Int. Cl.: B60S 1/08

(54) **Scheibenwischeranlage und Verfahren zum Betreiben einer Scheibenwischeranlage**
Windscreen wiper device and method for operating a windscreen wiper device
Installation d'essuie-glace et procédé de fonctionnement d'une installation d'essuie-glace

(30) Priorität: 20.06.2007 DE 102007028385
(43) Veröffentlichungstag der Anmeldung: 24.12.2008
(73) Patentinhaber: Robert Bosch GmbH, 70442 Stuttgart (DE)
(72) Erfinder: Trenkle, Lothar, 77833 Ottersweier (DE)

(56) Entgegenhaltungen:
- WO-A1-2007/079994
- DE-A1-102005 050 774
- FR-A1- 2 852 904

## Beschreibung

### Stand der Technik

Die Erfindung betrifft eine Scheibenwischeranlage für ein Kraftfahrzeug gemäß dem Oberbegriff des Anspruchs 1 sowie ein Verfahren zum Betreiben einer Scheibenwischeranlage gemäß dem Oberbegriff des Anspruchs 11.

Eine derartige Scheibenwischeranlage sowie ein derartiges Verfahren zum Betreiben einer Scheibenwischeranlage sind aus der DE 10 2005050774 A1 der Anmelderin bekannt.

Insbesondere in den Fällen, in denen ein Scheibenwischerantrieb eine zu geringe Selbsthemmung aufweist, kann es vorkommen, dass der mit dem Scheibenwischerantrieb betätigbare Wischerarm bei abgeschaltetem Antriebsmotor durch den Winddruck bei einer Fahrt mit hoher Geschwindigkeit ungewollt aus seiner Parklage herausbewegt wird. Derselbe Effekt kann auftreten, wenn der Wischerarm von den Bürsten einer Waschanlage kraftbeaufschlagt wird. Um den Wischerarm wieder zurück in seine Parklage zu bewegen, ist ein aktives Eingreifen des Fahrzeugführers durch Aktivieren der Scheibenwischeranlage mit einem Lenkstockschalter notwendig. Diese Vorgehensweise ist umständlich und unkomfortabel für den Fahrzeugführer.

Daher wird es bei der DE 10 2005050774 A1 vorgeschlagen, der Scheibenwischeranlage einen Sensor zuzuordnen, der derart ausgebildet und/oder angeordnet ist, dass er ein Herausbewegen des Wischerarms aus seiner Parklage detektiert und ein entsprechendes Signal an die Steuereinheit des Antriebsmotors übermittelt. Die Steuereinheit ist dabei derart ausgebildet, dass diese auf Basis des Sensorsignals und ggf. weiterer Informationen ein ungewolltes Herausbewegen des Wischerarms aus seiner Parklage erkennt und bei Erkennen eines ungewollten Herausbewegens des Wischerarms aus seiner Parklage den Antriebsmotor derart ansteuert, dass dieser den Wischerarm zurück in seine Parklage bewegt.

Der Erfindung liegt die Aufgabe zugrunde, die bekannte Scheibenwischeranlage bzw. deren Betriebsverfahren derart weiterzubilden, dass sich der Wischerarm unmittelbar nach dem Zurückbewegen in die Parklage, beispielsweise aufgrund starken Fahrtwindes, nicht wieder ungewollt aus seiner Parklage herausbewegt. Diese Aufgabe wird bei einer Scheibenwischeranlage bzw. deren Betriebsverfahren gemäß den Merkmalen der unabhängigen Ansprüche gelöst.

Vorteilhafte Weiterbildungen der Erfindung sind in den Unteransprüchen angegeben.

In Weiterbildung der Erfindung ist mit Vorteil vorgesehen, dass der Sensor derart ausgebildet und/oder angeordnet ist, dass dieser ein Herausbewegen des Wischerarms aus seiner Parklage erst dann detektiert, wenn letzterer einen Mindestverstellweg aus seiner Parklage zurückgelegt hat. Hierdurch kann eine Bestromung des Antriebsmotors bei einer nur minimalen, i.d.R. nicht störenden Verstellbewegung des Wischerarms vermieden werden. Wird als Sensor beispielsweise ein Drehwinkelsensor eingesetzt, so detektiert dieser bereits eine minimale Verschwenkbewegung des Wischerarms aus seiner Parklage heraus. Um ein unnötiges Bestromen des Antriebsmotors auch im Falle des Vorsehens eines derartigen Sensors zu vermeiden, wenn der Wischerarm nur eine geringe Verstellbewegung aus seiner Parklage heraus vollführt hat, ist es von Vorteil, dass die Steuereinheit derart ausgebildet wird, dass diese erst auf ein ungewolltes Verlassen der Parklage schließt bzw. ein ungewolltes Herausbewegen des Wischerarms aus der Parklage erkennt und in der Folge den Antriebsmotor nicht bestromt, wenn der Wischerarm einen vorgegebenen Verstellweg, insbesondere Schwenkwinkel, aus seiner Parklage zurückgelegt hat.

Vorzugsweise handelt es sich bei dem Sensor um einen Sensor, der unabhängig von der Bestromung des Antriebsmotors aktiv ist. Anders ausgedrückt ist der Sensor in Weiterbildung der Erfindung derart ausgebildet, dass er ein ungewolltes Herausbewegen des Wischerarms auch für den Fall oder ausschließlich für den Fall erkennt, dass der Antriebsmotor insbesondere durch Vorgabe durch den Fahrzeugführer, insbesondere mittels eines Lenkstockschalters, deaktiviert ist.

Üblicherweise ist in bekannten Scheibenwischeranlagen bereits ein Drehwinkelsensor integriert, mittels dem das Erreichen der Parklage des Wischerarms detektiert wird. Insbesondere zum Einsparen von Sensorkosten und zur Minimierung des Bauraumbedarfs ist es von Vorteil, wenn dieser Drehwinkelsensor zum Detektieren des ungewollten Verlassens der Parklage durch den Wischerarm eingesetzt wird. Zusätzlich oder alternativ zu einem bereits vorhandenen Drehwinkelsensor kann ein, insbesondere ausschließlich zum Detektieren des Verlassens der Parklage ausgebildeter und/oder angeordneter, Drehwinkelsensor vorgesehen werden. Vorzugsweise ist der Drehwinkelsensor unabhängig von dem Antriebsmotor bestrombar, um zu verhindern, dass der Antriebsmotor zwingend bestromt werden muss, um ein Herausbewegen des Wischerarms aus seiner Parklage detektieren zu können.

Von besonderem Vorteil ist eine Ausführungsform, bei der der Sensor als Schalter ausgebildet ist. Dabei kann der Schalter von dem Wischerarm und/oder dem Antriebsmotor betätigbar ausgebildet und/oder angeordnet sein. Vorzugsweise ist der Schalter derart angeordnet und/oder ausgebildet, dass er erst geschaltet wird, wenn der Wischerarm einen Mindestverstellweg zurückgelegt hat. Alternativ kann beispielsweise auch ein optischer Sensor, insbesondere eine Lichtschranke, vorgesehen werden.

Eine vorteilhafte Möglichkeit zur Ausbildung des Schalters besteht darin, den Schalter als Magnetschalter auszubilden, wobei beispielsweise der Wischerarm einen Permanentmagneten zum Schalten des vorzugsweise ebenfalls einen Permanentmagneten aufweisenden Schalters trägt. Ebenso ist die Ausbildung des Schalters bzw. des Aktiviermechanismus für den Schalter mit mindestens einem Elektromagneten denkbar. Besonders zuverlässig und kostengünstig ist eine Ausführungsform des als Sensor dienenden Schalters, bei der der Schalter einen Schalthebel aufweist, der durch einen mechanischen Kontakt verstellbar ist. Dabei kann der Schalthebel von einer Antriebsmotorkomponente, beispielsweise einem auf der Motorwelle sitzenden Vorsprung, oder dem Wischerarm betätigbar angeordnet sein.

Von besonderem Vorteil ist eine Scheibenwischeranlage, bei der auf ein Kurbelgetriebe zum pendelnden Antrieb des Wischerarms verzichtet wird. Bevorzugt ist der Wischerarm dabei unmittelbar drehfest mit der Motorwelle des Antriebs verbunden. Die Erfindung führt auch auf ein Verfahren zum Betreiben einer Wischeranlage, das sich dadurch auszeichnet, dass ein Wischerarm automatisch zurück in seine Parklage bewegt wird, wenn festgestellt wird, dass dieser sich ungewollt aus seiner Parklage entfernt hat. Bezüglich möglicher Weiterbildungen des Verfahrens zum Betreiben einer Wischeranlage wird auf die vorhergehende Beschreibung verwiesen, wobei auch vorrichtungsgemäß offenbarte Merkmale als verfahrensgemäß offenbart gelten und auch verfahrensgemäß beanspruchbar sein sollen.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: ein erstes Ausführungsbeispiel einer Scheibenwischeranlage mit einem als mechanischen Schalter ausgebildeten Sensor zum Detektieren eines unge- wollten Herausbewegens eines Wischerarms aus seiner Parklage und
- Fig. 2:: ein zweites Ausführungsbeispiel einer Scheibenwischeranlage, wobei zum Erkennen des unbeabsichtigten Herausbewegens des Wischerarms aus seiner Parklage ein Winkelsensor vorgesehen ist.

### Ausführungsformen der Erfindung

In den Figuren sind gleiche Bauteile und Bauteile mit der gleichen Funktion mit den gleichen Bezugszeichen gekennzeichnet.

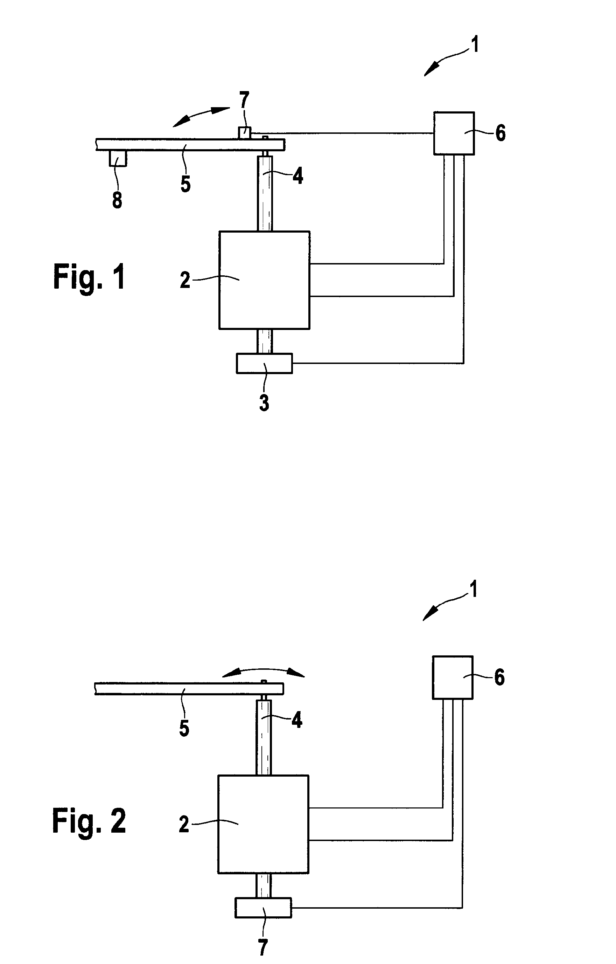

In Fig. 1 ist stark schematisiert eine Scheibenwischeranlage 1 für ein Kraftfahrzeug dargestellt. Die Scheibenwischeranlage 1 umfasst einen elektrischen Antriebsmotor, der mit einem Drehwinkelsensor 3 ausgestattet ist. Der Drehwinkelsensor 3 detektiert den Drehwinkel einer Motorwelle 4 (Antriebswelle) des Antriebsmotors 2.

Drehfest mit einem dem Drehwinkelsensor 3 gegenüberliegenden freien Ende der Motorwelle 4 ist ein Wischerarm 5 mit einem nicht gezeigten Wischblatt verbunden. Der Wischerarm 5 ist mittels des Antriebsmotors 2 pendelnd hin und her bewegbar, wobei sich der Wischerarm 5 in Fig. 1 in einer Parklage befindet.

Dem Antriebsmotor 2 ist eine elektronische Steuereinheit 6 zugeordnet, die signalleitend mit dem Drehwinkelsensor 3 verbunden ist und die den Antriebsmotor 2 in Abhängigkeit der Vorgabe eines Fahrzeugführers über einen nicht gezeigten Lenkstockschalter bestromt.

Dem Wischerarm 5 ist ein als Schalter ausgebildeter Sensor 7 zugeordnet, wird jedes Mal, wenn der Wischerarm 5 einen Schalthebel dieses Schalters umlegt, der Wischerarm 5 den Schalter also schaltet, von diesem ein entsprechendes elektrisches Signal an die Steuereinheit 6 gesendet. Für den Fall, dass der Antriebsmotor 2 gemäß einer Vorgabe des Fahrzeugführers deaktiviert ist und der Sensor 7 aktiviert wird und von dem Sensor 7 ein entsprechendes Signal an die Steuereinheit 6 ausgegeben wird, erkennt die Steuereinheit 6 ein ungewolltes Herausbewegen des Wischerarms 5 aus seiner Parklage, die sich vorzugsweise in einem unteren Bereich einer Frontscheibe oder einer Heckscheibe befindet. Unmittelbar nach Erkennen eines ungewollten Herausbewegens des Wischerarms 5 aus seiner Parklage wird der Antriebsmotor 2 von der Steuereinheit 6 derart bestromt, dass der Wischerarm 5 zurück in seine Parklage bewegt wird, wobei das Erreichen der Parklage von dem Drehwinkelsensor 3 erkannt wird. Gemäß einer ersten Alternative wird die Bestromung des Antriebsmotors 2 sofort nach Erreichen der Parklage unterbrochen. Gemäß einer zweiten Alternative wird der Antriebsmotor 2 für eine vorgegebene Zeitspanne weiter bestromt, so dass der Wischerarm 5 gegen einen Anschlag 8 kraftbeaufschlagt wird, um zu verhindern, dass der Wischerarm 5, beispielsweise aufgrund ungünstiger Windverhältnisse, unmittelbar wieder ungewollt aus seiner Parklage herausbewegt werden kann. Der Sensor 7 muss nicht zwangsläufig unmittelbar von dem Wischerarm 5 betätigbar sein. Es ist auch denkbar, den Sensor 7 innerhalb des Antriebsmotors 2 oder im Bereich des Antriebsmotors 2 anzuordnen, beispielsweise derart, dass dieser von der Motorwelle 4 oder einem nicht gezeigten Fortsatz an der Motorwelle 4 betätigbar ist.

In Fig. 2 ist ein alternatives Ausführungsbeispiel einer Scheibenwischeranlage 1 gezeigt. Die Scheibenwischeranlage 1 umfasst einen elektrischen Antriebsmotor 2 mit einer Motorwelle 4, mit der drehfest ein Wischerarm 5 verbunden ist. Ferner sitzt auf der Motorwelle 4 ein als Drehwinkelsensor ausgebildeter Sensor 7, der signalleitend mit einer Steuereinheit 6 verbunden ist. In der schematischen Darstellung gemäß Fig. 2 befindet sich der Wischerarm 5 in einer Parklage in einem unteren Bereich einer Fahrzeugscheibe. Wird der Wischerarm 5 bei nicht bestromtem Antriebsmotor 2 aus seiner Parklage herausbewegt, so wird dies durch den Sensor 7 detektiert, wobei der Sensor 7 entsprechende inkrementale Signale an die Steuereinheit 6 weitergibt. Die Steuereinheit 6 ist so aufgebaut, dass sie nicht unmittelbar bei Erhalt eines ersten Signals des Drehwinkelsensors auf ein ungewolltes Herausverstellen des Wischerarms 5 aus seiner Parklage erkennt. Erst wenn der Wischerarm 5 einen bestimmten Schwenkwinkel überschritten hat, der als Drehwinkelsensor ausgebildete Sensor 7 also eine bestimmte Anzahl von Signalen an die Steuereinheit 6 gesendet hat, und die Steuereinheit 6 gleichzeitig erkennt, dass der Antriebsmotor 2 deaktiviert ist, erkennt sie auf ein ungewolltes Herausbewegen des Wischerarms 5 aus seiner Parklage und bestromt den Antriebsmotor 2 derart, dass der Wischerarm 5 zurück in seine Parklage bewegt wird, wobei das Erreichen der Parklage von dem als Drehwinkelsensor ausgebildeten Sensor 7 detektiert wird. Alternativ dazu ist es denkbar, dass von dem Wischerarm 5 oder einem sonstigen Bauteil der Scheibenwischeranlage 1 bei Erreichen der Parklage ein, beispielsweise als Druckschalter ausgebildeter, Sensor betätigt wird.

## Patentansprüche

1. Scheibenwischeranlage für ein Kraftfahrzeug, mit einem elektrischen Antriebsmotor (2) zum Antreiben eines Wischerarms (5), mit einer dem Antriebsmotor (2) zugeordneten elektronischen Steuereinheit (6), wobei ein signalleitend mit der Steuereinheit (6) verbundener Sensor (7) vorgesehen ist, mit dem detektierbar ist, dass sich der Wischerarm (5) aus seiner Parklage herausbewegt, und dass die Steuereinheit (6) den Antriebsmotor (2), bei Erkennen eines ungewollten Herausbewegens des Wischerarms (5) aus seiner Parklage, derart ansteuert, dass dieser den Wischerarm (5) zurück in seine Parklage bewegt,
**dadurch gekennzeichnet, dass**
die Steuereinheit (6) den Antriebsmotor (2) derart ansteuernd ausgebildet ist, dass dieser den Wischerarm (5) nach dem Zurückbewegen in seine Parklage für eine insbesondere vorgegebene Zeitspanne, vorzugsweise gegen einen Anschlag, drehmomentbeaufschlagt.

2. Scheibenwischeranlage nach Anspruch 1,
**dadurch gekennzeichnet,**
**dass** der Sensor (7) derart ausgebildet und/oder angeordnet ist, dass er ein Herausbewegen des Wischerarms (5) aus seiner Parklage erst detektiert, wenn sich der Wischerarm (5) um einen vorgegebenen Schwenkwinkel aus der Parklage herausbewegt hat und/oder dass die Steuereinheit (6) derart ausgebildet ist, dass sie ein Herausbewegen des Wischerarms (5) aus seiner Parklage erst erkennt, wenn sich der Wischerarm (5) um einen vorgegebenen Schwenkwinkel aus der Parklage herausbewegt hat.

3. Scheibenwischeranlage nach einem der vorhergehenden Ansprüche,
**dadurch gekennzeichnet,**
**dass** der Sensor (7) derart ausgebildet ist, dass er ein ungewolltes Herausbewegen des Wischerarms (5) aus seiner Parklage, insbesondere ausschließlich, für den Fall detektiert, dass der Antriebsmotor (2), insbesondere mittels eines Lenkstockschalters (7), deaktiviert ist.

4. Scheibenwischeranlage nach einem der vorhergehenden Ansprüche,
**dadurch gekennzeichnet,**
**dass** der Sensor (7) als Drehwinkelsensor ausgebildet ist.

5. Scheibenwischeranlage nach einem der vorhergehenden Ansprüche,
**dadurch gekennzeichnet,**
**dass** der Sensor (7) als Schalter ausgebildet ist.

6. Scheibenwischeranlage nach Anspruch 5,
**dadurch gekennzeichnet,**
**dass** der Schalter von dem Wischerarm (5) und/oder eines Bauteils des Antriebsmotors (2) betätigbar ist.

7. Scheibenwischeranlage nach einem der Ansprüche 5 oder 6,
**dadurch gekennzeichnet,**
**dass** der Schalter als Magnetschalter ausgebildet ist.

8. Scheibenwischeranlage nach einem der Ansprüche 5 bis 7,
**dadurch gekennzeichnet,**
**dass** der Schalter einen Schalthebel aufweist.

9. Scheibenwischeranlage nach einem der vorhergehenden Ansprüche,
**dadurch gekennzeichnet,**
**dass** der Wischerarm (5) drehfest mit einer Motorwelle (4) des Antriebs (2) verbunden ist.

10. Verfahren zum Betreiben einer Scheibenwischeranlage (1), nach einem der vorhergehenden Ansprüche, wobei ein Wischerarm (5) der Scheibenwischeranlage (1), wenn sich dieser ungewollt aus seiner Parklage herausbewegt, automatisch wieder in seine Parklage zurückbewegt wird,
**dadurch gekennzeichnet,**
**dass** der Antriebsmotor (22) derart angesteuert wird, dass dieser den Wischerarm (5) nach dem Zurückbewegen in seine Parklage für eine, insbesondere vorgegebene, Zeitspanne, vorzugsweise gegen einen Anschlag, drehmomentbeaufschlagt wird.

## Claims

1. Windscreen wiper device for a motor vehicle, having an electric drive motor (2) for driving a wiper arm (5), having an electronic control unit (6) assigned to the drive motor (2), wherein a sensor (7) which is connected in a signal-conductive fashion to the control unit (6) is provided, with which sensor (7) it is possible to detect that the wiper arm (5) moves out of its parked position, and that, when undesired movement of the wiper arm (5) out of its parked position is detected, the control unit (6) actuates the drive motor (2) in such a way that said drive motor (2) moves the wiper arm (5) back into its parked position,
**characterized in that**
the control unit (6) is designed to actuate the drive motor (2) in such a way that said drive motor (2) preferably applies torque to the wiper arm (5) after the movement back into its parked position, preferably against a stop, and, in particular, for an, in particular, predefined time period.

2. Windscreen wiper device according to Claim 1,
**characterized**
**in that** the sensor (7) is embodied and/or arranged in such a way that it does not detect movement of the wiper arm (5) out of its parked position until the wiper arm (5) has moved out of the parked position through a predefined pivoting angle and/or in that the control unit (6) is designed in such a way that it does not detect movement of the wiper arm (5) out of its parked position until the wiper arm (5) moves out of the parked position through a predefined pivoting angle.

3. Windscreen wiper device according to one of the preceding claims,
**characterized**
**in that** the sensor (7) is designed in such a way that it detects undesired movement of the wiper arm (5) out of its parked position, in particular exclusively in the event of the drive motor (2) being deactivated, in particular by means of a steering column switch (7).

4. Windscreen wiper device according to one of the preceding claims,
**characterized**
**in that** the sensor (7) is embodied as a rotational angle sensor.

5. Windscreen wiper device according to one of the preceding claims,
**characterized**
**in that** the sensor (7) is embodied as a switch.

6. Windscreen wiper device according to Claim 5,
**characterized**
**in that** the switch can be activated by the wiper arm (5) and/or a component of the drive motor (2).

7. Windscreen wiper device according to one of Claims 5 and 6,
**characterized**
**in that** the switch is embodied as a magnetic switch.

8. Windscreen wiper device according to one of Claims 5 to 7,
**characterized**
**in that** the switch has a switching lever.

9. Windscreen wiper device according to one of the preceding claims,
**characterized**
**in that** the wiper arm (5) is connected in a rotationally fixed fashion to a motor shaft (4) of the drive (2).

10. Method for operating a windscreen wiper device (1) according to one of the preceding claims, wherein if a wiper arm (5) of the windscreen wiper device (1) moves undesirably out of its parked position, said wiper arm (5) is moved back automatically into its parked position,
**characterized**
**in that** the drive motor (22) is actuated in such a way that it applies torque to the wiper arm (5) after the movement back into its parked position, preferably against a stop, for an, in particular, predefined time period.

## Revendications

1. Installation d'essuie-glace pour un véhicule automobile, comprenant un moteur d'entraînement électrique (2) pour l'entraînement d'un bras d'essuie-glace (5), une unité de commande électronique (6) associée au moteur d'entraînement (2), dans laquelle un capteur (7) associé par liaison de signaux à l'unité de commande (6) est prévu, lequel permet de détecter que le bras d'essuie-glace (5) se déplace hors de sa position de rangement, et dans laquelle l'unité de commande (6) commande le moteur d'entraînement (2), à la détection d'un déplacement indésirable du bras d'essuie-glace (5) hors de sa position de rangement, de telle sorte que ledit moteur d'entraînement ramène le bras d'essuie-glace (5) dans sa position de rangement,
**caractérisée en ce que**
l'unité de commande (6) est réalisée de manière à commander le moteur d'entraînement (2) de telle sorte que celui-ci sollicite avec un couple le bras d'essuie-glace (5), après son retour dans sa position de rangement, pendant un certain intervalle de temps notamment prédéfini, de préférence contre une butée.

2. Installation d'essuie-glace selon la revendication 1,
**caractérisée en ce que**
le capteur (7) est réalisé et/ou disposé de telle sorte qu'il détecte un déplacement du bras d'essuie-glace (5) hors de sa position de rangement seulement lorsque le bras d'essuie-glace (5) s'est déplacé hors de la position de rangement suivant un angle de pivotement prédéfini, et/ou **en ce que** l'unité de commande (6) est réalisée de telle sorte qu'elle détecte un déplacement du bras d'essuie-glace (5) hors de sa position de rangement seulement lorsque le bras d'essuie-glace (5) s'est déplacé hors de la position de rangement suivant un angle de pivotement prédéterminé.

3. Installation d'essuie-glace selon l'une quelconque des revendications précédentes,
**caractérisée en ce que**
le capteur (7) est réalisé de telle sorte qu'il détecte un déplacement indésirable du bras d'essuie-glace (5) hors de sa position de rangement exclusivement au cas où le moteur d'entraînement (2) est désactivé, notamment au moyen d'un commutateur de colonne de direction (7).

4. Installation d'essuie-glace selon l'une quelconque des revendications précédentes,
**caractérisée en ce que**
le capteur (7) est réalisé sous forme de capteur d'angle de rotation.

5. Installation d'essuie-glace selon l'une quelconque des revendications précédentes,
**caractérisée en ce que**
le capteur (7) est réalisé sous forme de commutateur.

6. Installation d'essuie-glace selon la revendication 5,
**caractérisée en ce que**
le commutateur peut être actionné par le bras d'essuie-glace (5) et/ou par un composant du moteur d'entraînement (2).

7. Installation d'essuie-glace selon l'une quelconque des revendications 5 ou 6,
**caractérisée en ce que**
le commutateur est réalisé sous forme de commutateur magnétique.

8. Installation d'essuie-glace selon l'une quelconque des revendications 5 à 7,
**caractérisée en ce que**
le commutateur présente un levier de commutation.

9. Installation d'essuie-glace selon l'une quelconque des revendications précédentes,
**caractérisée en ce que**
le bras d'essuie-glace (5) est connecté de manière solidaire en rotation à un arbre de moteur (4) de l'entraînement (2).

10. Procédé pour faire fonctionner une installation d'essuie-glace (1) selon l'une quelconque des revendications précédentes, dans lequel un bras d'essuie-glace (5) de l'installation d'essuie-glace (1), lorsque celui-ci se déplace de manière indésirable hors de sa position de rangement, est ramené automatiquement dans sa position de rangement,
**caractérisé en ce que**
le moteur d'entraînement (22) est commandé de telle sorte que celui-ci sollicite avec un couple le bras d'essuie-glace (5), après son retour dans sa position de rangement, pendant un certain intervalle de temps notamment prédéfini, de préférence contre une butée.
